# EUROPEAN PATENT SPECIFICATION

(11) **EP 1 007 904 B1**
(45) Date of publication and mention of the grant of the patent: **09.03.2005**
(21) Application number: 98939039.8
(22) Date of filing: 13.08.1998
(51) Int. Cl.: G01B 11/24, G01B 11/30

(54) **METHOD AND DEVICE FOR MEASURING AN ENVELOPE SURFACE**
VERFAHREN UND VORRICHTUNG ZUM MESSEN EINER AUSSENOBERFLÄCHE
PROCEDE ET DISPOSITIF DE MESURE D'UNE SURFACE EXTERIEURE

(30) Priority: 22.08.1997 SE 9702945
(43) Date of publication of application: 14.06.2000
(73) Proprietor: Metso Paper, Inc., 00130 Helsinki (FI)
(72) Inventor: ROSBERG, Lars, Tomas, Ragnar, S-653 44 Karlstad (SE); STARK, Mats, Ola, S-652 21 Karlstad (SE)
(74) Representative: Lundquist, Lars-Olof
(86) International application number: PCT/SE1998/001465
(87) International publication number: WO 1999/010708

(56) References cited:
- WO-A1-96/04423
- US-A- 3 923 402
- US-A- 4 725 738
- US-A- 5 587 051
- US-A- 5 605 097
- US-A- 5 617 645

## Description

The present invention relates to a method for, without contact and with the aid of a measuring device, measuring in a predetermined measuring area in connection to an envelope surface of at least one measuring object journalled rotatably in a machine stand of a paper machine, with respect to its cylindricity and/or its straightness relative to a straightness reference arranged substantially parallel with the axis of rotation of the measuring object, which measuring device comprises said straightness reference, a measuring stand and a linearly movably journalled measuring carriage on which at least one measuring means is arranged, said measuring carriage during said measurement is traversed along an elongate form-stable support member forming a part of the measuring stand, and running substantially parallel to the axis of rotation of the measuring object, whereby said measuring means is moved to one or more desired positions for the measurement, and the measuring means is caused to perform a measurement of the present measurement values at each such position selected in said measuring area. The measurement commences with a starting position for the measuring means relative the straightness reference and the measuring object being determined, which starting position comprises an initial position for the rotating measuring object, a current position along the support member and a position in radial direction from the envelope surface of the measuring object. A first measurement is performed for this starting position. The measuring means is thereafter moved to at least one more position along the support member while this or these new positions are continuously determined in relation to each other or said starting position, whereupon a measurement occurs in said measuring area at each position. A laser beam is used as straightness reference, said laser beam being generated by a laser unit.

The invention also relates to a measuring device for, without contact, measuring in a predetermined measuring area in connection to an envelope surface of at least one measuring object journalled rotatably in a machine stand of a paper machine, with respect to its cylindricity and/or its straightness relative to a straightness reference, said straightness reference being arranged substantially parallel with the axis of rotation of the measuring object, which measuring device comprises said straightness reference, a measuring stand and a linearly movably journalled measuring carriage on which at least one measuring means is arranged, said measuring carriage during said measurement is traversed along an elongate form-stable support member forming a part of the measuring stand, and running substantially parallel to the axis of rotation of the measuring object. Said straightness reference comprises a laser beam which is generated by a laser unit comprising a laser transmitter and a receiver detector.

Substantially all machines include a larger or smaller number of machine elements which are in the shape of cylindrical bodies that rotate about an axis of rotation during operation. In a paper machine, for instance, such machine elements consist primarily of either rolls or drying cylinders such as Yankee cylinders, the rolls usually being used to influence a continuous material web in one or more roll nips through which the web runs, to transfer some form of liquid, mixture or the like to said material web and also to support, guide and propel the web, whereas the drying cylinders are used to dry the moving web before it is finally reeled to a finished reel of paper. The drying cylinder has a hollow, thin-walled drum, heated by steam, which has a polished envelope surface over and around which the moist material web is moved in contact with the surface so that considerable heat can be transferred to the web. In view of this heat transfer the drum has relatively large diameter in order to facilitate the necessary drying.

Common to said machine elements is that, due to their function and because they shall not influence the properties of the moving paper web in an uncontrolled and thus negative manner, they should normally be either as long as is technically possible, perfectly straight in their longitudinal extension, i.e. the envelope surface is parallel to said axis of rotation or cambered as in the specific case of a Yankee cylinder where instead of the actual cylinder being perfectly straight a carefully adjusted curvature is sought, a camber, which achieves the best possible uniformity in linear loading of the material web, and also perfectly cylindrical, i.e. that their physical cross section coincides exactly with the rotationally symmetrical cross section of the relevant machine element having one and the same radius around the axis of rotation for any imagined cross section along this axis. Any deviation, such as an incorrect or discontinuous camber and/or out of roundness, thus always affects the pressing, operability and, in the case of Yankee cylinders, the creping. Depending on how and where these deviations appear, the paper produced in the paper machine will not achieve the uniform paper properties striven for as far as possible.

Measurement and inspection of the envelope surface of a measuring object, e.g. a Yankee cylinder, are relatively simple to perform when it is not in operation and a great deal of information can therefore be obtained. The shape of the envelope surface can be compared, for instance, with the rotationally symmetrical cross section described above in order to determine the size and any variation in the cylindricity or the straightness profile of the measuring object. For the sake of simplicity the word "straightness" is used instead of the expression "straightness profile". Furthermore deposits, corrosion, wear patterns and the magnitude of this wear can be observed or measured. However, the shape of the Yankee cylinder's envelope surface, and thus the properties of said cylinder, are very different during operation from when it is stationary, because of the unavoidable deformations that occur during operation. Said deformations are caused primarily by three different loads, viz. linear pressure or loading from press rollers, an internal steam pressure and temperature forces.

If the measuring object consists of a drying cylinder, the temperature forces mentioned above are caused by heating from the water vapour used for the drying process, which affects the shape and dimensions of the drying cylinder.

These stresses arise because the construction can never be completely homogeneous and the measuring object, particularly in the case of a thin, hollow drum which is also subjected to many other forces such as centrifugal force, linear pressure, steam pressure, vibration forces, etc., is always deformed to a greater or lesser extent during operation. Even extremely slight changes in the parts of the machine element give rise to friction, wear and, in the worst case, even an increased risk of rupture in the moving material web, which always entails extremely high costs. It is therefore vital to arrive at a satisfactory method of correctly measuring the envelope surface even during full operation of the paper machine.

In a previously suggested measuring device, e.g. "Tissue Making '89: Creping and Drying", October 5-6, 1989 in Karlstad, Sweden, VALMET Paper Machinery, Uddeholm Strip, pages 75-78, a distance transducer stated to be a "non contact eddy-current type displacement transducer" is used for measuring the envelope surface of a Yankee cylinder. This "displacement transducer" is supposed to enable measurement of the distance between the envelope surface and the transducer with an accuracy of ± 1/100 mm when the cylinder is in full operation which, as established below, is not the case. Carried by a movable measuring carriage, the transducer is moved along a device travelling longitudinally along the Yankee cylinder and included in said measuring means which is suitably secured to the stand of the doctor blade, the doctor-blade beam, transverse to the paper machine. Situated at a specific first position along and close to the envelope surface of the Yankee cylinder, the transducer emits an extremely accurate signal which is thus proportional to the distance to said envelope surface. After one complete turn of the drying cylinder, therefore, the cylindricity of the envelope surface for this first position can be determined with relatively great precision.

However, it is in practice impossible to subsequently move the transducer along the envelope surface of the cylinder to a specific second, third, and so on position absolutely in line with the first position, and at the same time completely parallel with the axis of rotation of the cylinder with an accuracy equal to or better than the resolving power of the transducer mentioned above. When measuring straightness profile, therefore, the measurement performed for a specific first position must in some way be related to corresponding measured values for every other position along the cylinder. In said measuring device, therefore, a taut metal wire, e.g. a piano wire, is used as straightness reference, this reference wire being arranged as best possible between two attachment devices in a measuring stand arranged in said measuring device parallel to the envelope surface of the cylinder and extending from the drive side of the paper machine across the entire length of the cylinder close to its downstream side.

Due to the unavoidable physical properties of the straightness reference, however, the measured values obtained acquire a number of unavoidable measuring errors. One of the reasons is the fact that a certain apparently slight, but due to the accuracy of the measurements still not negligible, sag occurs which is greatest at the middle of the wire and the measured value in the measuring direction of the transducer with thus naturally also be incorrect. The magnitude of this sag varies greatly depending on the tension to which the wire is subjected and also on the stretch and creep occurring in the wire as a result of this tension.

In said measuring device an attempt to solve this problem has been made by applying a specific tension in the wire firmly anchored to the measuring device by one end, with the aid of a weight attached at the other, free end of the wire. Since it is arranged to extend over and round a rotatable member arranged at the opposite end of the measuring device from the fixed attachment, the wire will always be kept taut. How much this weight weighs has thus been calculated and chosen so that the wire tension obtained will be very close to the yield point of the wire used so that its suspension and curvature are minimized maximally without risking a break in the wire.

The measuring means can thereafter be adjusted laterally to a fix position in relation to the reference wire for each selected measuring position along the envelope surface of the Yankee cylinder. Since the length of the reference wire must at least be equal to the length of the object being measured which in paper mills used nowadays may be more than 8 meter, as well as the measuring accuracy being ± 1/100 mm, it will be understood that the unavoidable sag in the wire constitutes an extremely considerable problem which must be determined, despite maximum wire tension having been applied for the reference wire, and the measured values obtained by the transducer for each new measuring position along the measuring object must be corrected in accordance with the change in position that has thus occurred in the measuring direction of the transducer.

In the described measuring device the measured values may be reported in isometric form, for example, so that a topographic map of the envelope surface is drawn showing the irregularities thus ascertained in the longitudinal and transverse directions on said envelope surface.

Due to the proximity of the measuring device to the paper machine other error sources arise with the use of a straightness reference consisting of a reference wire, such as air turbulence caused by the rotating cylinder and by the moving material web, vibrations, collections of dust and paper fluff, liquid spray, etc. Thus, to reduce the influence of the above-mentioned error sources, the straightness reference must be checked, and possibly cleaned, and re-adjusted prior to each measurement and even during each measurement if said measurement comprises extended measurement sequences.

Furthermore, in the known measuring device the measuring carriage on which the measuring means is fitted must be pushed manually along the measuring beam and it is therefore extremely complicated to obtain any exact measuring positions in the cramped and hazardous space for the operator in the area around the doctor blade. This results in relatively long measuring times for each measurement sequence and the measurements can therefore really only be performed in a more or less efficient and safe manner on a paper machine which is temporarily out of operation, e.g. during repairs or service of the drying cylinder which, as ascertained above, gives a completely different and poorer measurement result - exactly the problem the known device was intended to remedy.

US-A-5 617 645 describes a non-contact precision measurement system and a method of measuring using the system. The surface contour of an object, such as the envelope surface of a cylindrical roll of a paper machine, is measured utilising a laser distance measuring means on a carriage. The carriage is movable on a support member in a direction parallel to the axis of the cylindrical roll. A laser beam is used as straightness reference for the carriage travelling along the support member. Measurements are taken at different positions along the cylindrical roll.

The main object of the present invention is to provide an improved method and an improved device for measuring at the envelope surface of at least one object to be measured with respect to its cylindricity and/or straightness so that the above problems are eliminated or at least greatly reduced.

A second object of the present invention is to provide a method and a device for completely automatically and while simultaneously performing measurements, pass a transducer or measuring means, without contact, along a measuring stand substantially parallel with the cylindrical body or measuring object to be measured and at the same time automatically collect, process and visually present the result of said measurement.

A third object of the invention is to provide a method and a device for, as far as possible, obtaining an improved straightness reference which lacks or at least minimizes the errors and deficiencies that were unavoidable in the straightness references used hitherto.

A fourth object of the invention is to provide a method and a device for protecting said improved straightness reference from substantially all external influence.

A further object of the invention is to provide a method and a device for performing said measurement of the envelope surface of a measuring object during full operation of the machine in which said measuring object is included.

The method according to the invention is characterized in the laser beam is protected from external influence by being arranged along at least a part of its length in the shelter of an elongate protective device arranged substantially parallel with said support member.

The device according to the invention is characterized in that said laser beam is protected from external influence by being arranged along at least a part of its length in the shelter of an elongate protective device arranged substantially parallel with said support member.

The invention will be described in more detail in the following with reference to the accompanying drawings.
Figure 1 is a schematic perspective view of parts of a measuring device according to the present invention, seen from one long side of the measuring device and situated close to a cylindrical body to be measured, said measuring device comprising an electronic measuring and control unit, a measuring stand, a measuring carriage including a measuring means and a traversing device for said measuring carriage.
Figure 2 is a schematic top view of parts of a measuring device according to Figure 1 seen from above, showing a measuring beam included in said measuring stand comprising a schematic straightness reference and protective device and the measuring carriage running on the measuring beam.
Figure 3 is a front view of parts of the measuring device according to Figure 1 seen from the front, showing said measuring beam and measuring carriage, respectively and the traversing device.
Figure 4 is a schematic top view of parts of the traversing device according to Figure 3.
Figure 5 is a top view of parts of a motor included in the traversing device according to Figure 3, seen straight from above.
Figure 6 is a top view of parts of a retaining and adjustment member seen straight from above, included in the measuring device shown in Figure 1 comprising a setting member and an adjustment device.
Figure 7 is a front view of parts of the retaining and adjustment member according to Figure 6 seen from the front, showing a number of non-contact measuring means with protective members and spacers.
Figure 8 is a side view of parts of the retaining and adjustment member according to Figure 6, seen from one side.
Figure 9 is a cross section through parts of the measuring device according to Figure 1 showing a non-contact measuring means or a protective member and spacer in its position close to the cylindrical body arranged for measurement.

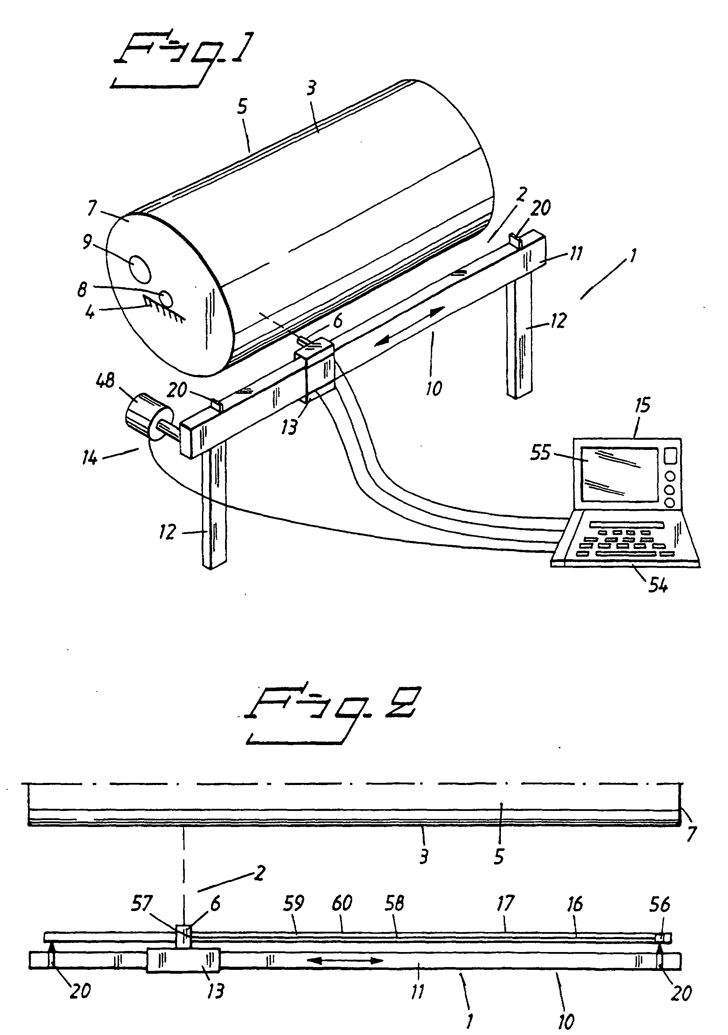

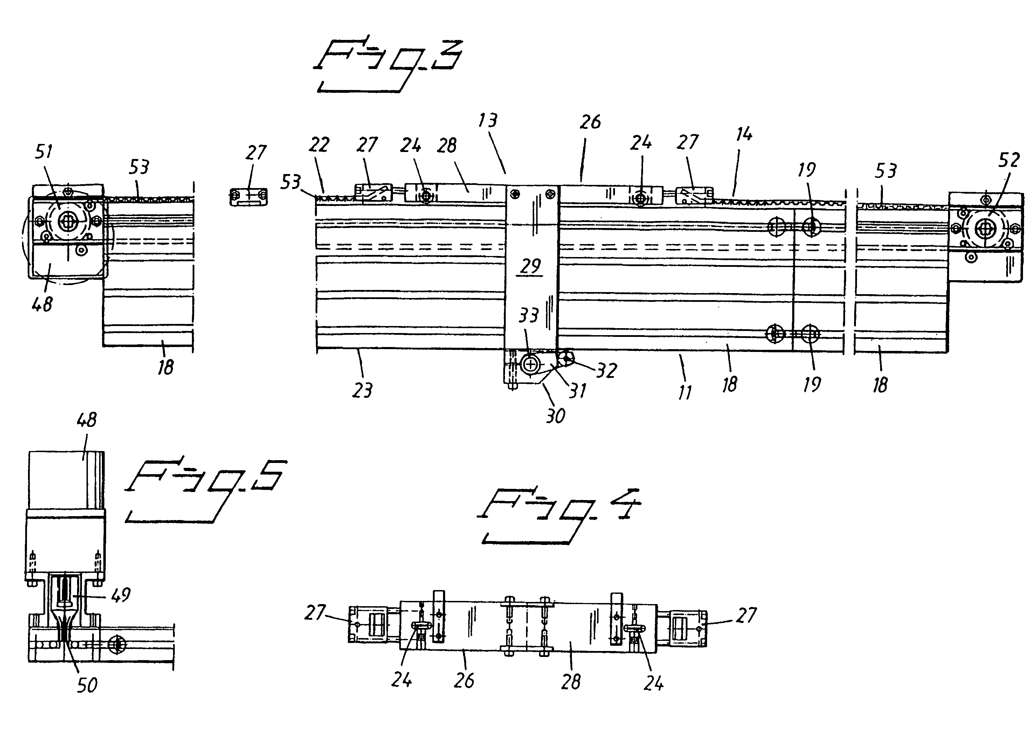

Figures 1 and 2 show schematically in perspective parts of the measuring device 1 according to the invention for measuring without contact in a predetermined measuring area 2 at, on, around and along an envelope surface 3 of at least one measuring object 5 rotatably journalled in a machine stand 4, preferably the machine stand 4 of a paper machine, to determine the cylindricity and/or straightness of said object, as well as any other desired property or determination of or at said measuring object 5, such as corrosion, wear, temperature or velocity, and also suitable properties of a material web running over and around said measuring object 5 deemed advantageous to determine with the aid of said measuring device 1 comprising at least one measuring means 6 suitable for the purpose.

In the embodiment shown in Figure 1 the measuring object 5 comprises a substantially cylindrical body, e.g. a roll or a cylinder, rotating about an axis of rotation 8, such as a drive shaft. At least one suitable revolution pulse device 9 is arranged close to the measuring object 5, suitably at one end wall 7 or one drive shaft extension 8 so that it can be determined when the measuring object 5 is at its zero or starting position, when it has rotated part of a revolution, one complete revolution or several complete revolutions. In the embodiment shown said revolution pulse device 9 may comprise an inductive transducer, suitably placed a few millimetres from said end wall 7, which reacts to a metal object arranged on the end wall, the transducer then having the advantage of an extremely short reaction time, a photocell detector comprising a reflector arranged at the axis of rotation 8 of the measuring object 5 and a transmitter which may be placed at a relatively much greater distance, approximately 0.5-1.0 m, from the rotating body 5 than the inductive transducer. The transmitter is therefore comparatively better protected than said inductive transducer but the reaction time of the photocell detector is somewhat longer than that of said inductive transducer.

The measuring device 1 according to the invention also comprises a measuring stand 10 consisting of an elongate, rigid, i.e. form-stable, support member 11 arranged substantially parallel with the axis of rotation 8 of the measuring object 5, e.g. a linear unit or a measuring beam, at each end of which measuring beam 11 an attachment means 12 is arranged. The measuring stand 10 is also provided with a linearly movably journalled measuring carriage 13 on which the measuring means 6 is arranged and which is arranged to be moved substantially parallel with said measuring beam 11, as well as a traversing device 14 to move said measuring carriage 13 to preferably predetermined, optional positions along said measuring beam 11 where measurement is desired, and an electronic measuring and control unit 15. Said measurement is performed with the aid of the non-contact measuring means 6 and a straightness reference 16 cooperating with this measuring means 6 (see Figure 2), which straightness reference is protected and screened from external influence by an elongate protective device 17, described in more detail below, arranged substantially parallel to said measuring beam 11.

By "substantially parallel with the axis of rotation 8 of the measuring object 5" is meant that the support member 11 is arranged so that said measurements will always be performed within the measuring area of respective measuring means 6.

In the embodiment shown each of said attachment means 12 may comprise at least one leg, a support or an attachment to the machine stand 4 mentioned above, in which the cylindrical body/bodies 5 to be measured are rotatably arranged, or else to some other permanent member able to give the requisite stability for the measuring device 1, e.g. the foundation of the machine.

When using the measuring device 1 according to the invention with a Yankee cylinder 5 in a paper machine, a space is required for assembly and manipulation of the measuring carriage 13 of said measuring device 1 which is more or less accessible close to and between the Yankee cylinder 5 and the moving web. The normal placing of the measuring device in this specific case, not shown, is suitably between the creping doctor and the cleaning doctor.

In order to reduce and as far as possible eliminate the vibrations transmitted to the measuring device 1 through the air, for instance, or through the attachment means 12 of the measuring device 1, construction elements are used in or designed for the measuring device 1 that have or achieve considerable rigidity and/or a vibration suppressing effect.

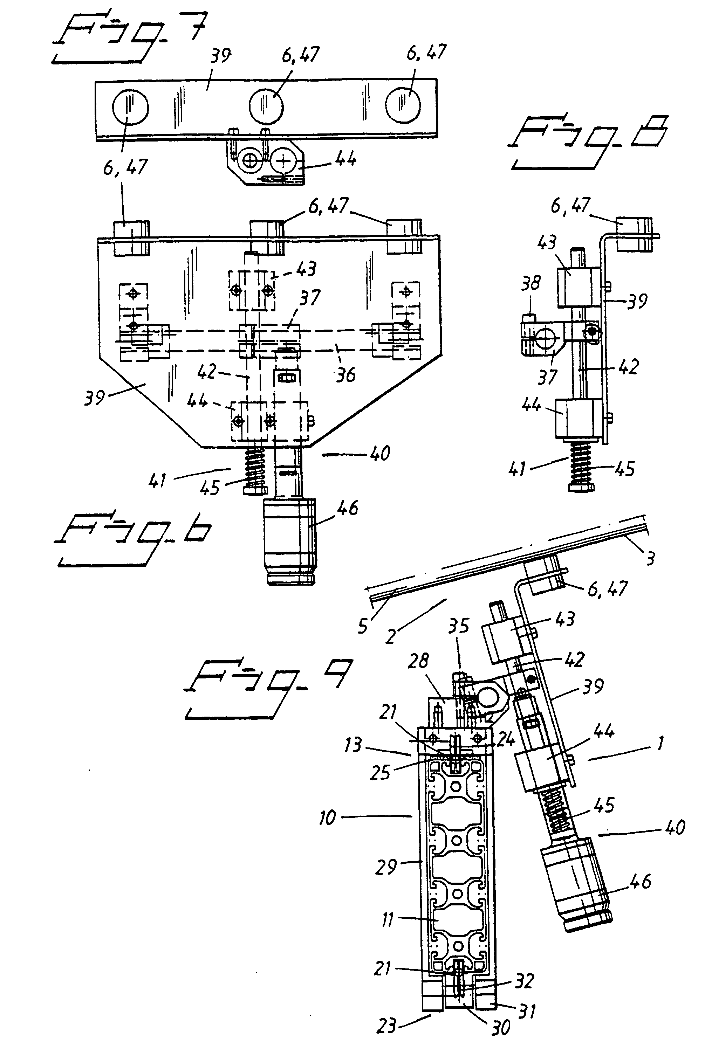

For this reason the measuring beam 11, see Figures 3-5, comprises a member, or if necessary several substantially identical sections 18, form-stable in all directions and rigidly joined together coaxially and/or in parallel, which sections are suitably made of composite material or metal, preferably steel or aluminium sections, see Figure 9. When several of the identical sections 18 must be joined together to form a coherent measuring beam 11 in order to obtain a total length corresponding to at least the length of the desired measuring area 2, generally equivalent to the extension of the measuring object 5, this is suitably achieved by means of detachable joints 19, e.g. screw or bolt joints, recessed in the sides of the sections 18, see Figure 3 so that the measuring device 1 can easily be taken apart and thus transported in an easily managed form, and also so that said detachable joints 19 shall not impede the linear travelling movement of the measuring carriage 13, for instance. Some form of stop member is arranged at each end of said measuring beam 11, adjustable to optional positions along the beam, see Figures 1-2, suitably consisting of a part of one or more non-contact end-sensing devices comprising transducers such as photocells, inductive transducers or the like for recording the current position of said measuring carriage 13 relative a start or end position as described in more detail below. Said stop member 20 may consist of any other known type of position-recording means, e.g. electric breakers, but non-contact stop members 20 are preferable since they do not cause unfavourable influence in the form of impact jolts. One or more linear journalling means 21, such as linear bearings or guides, are arranged along the measuring beam 11, substantially parallel thereto and at one or more of its sides. In the embodiment shown in Figure 9 two journalling members 21 are situated, one at the upper side 22 and the other at the lower side 23 of the measuring beam 11, which journalling members 21 comprise one or more parallel guides constituting a shaped bar, slide or rail along which some form of journalling member 24 arranged on the measuring carriage 13 runs in cooperation therewith. The journalling member may consist, for instance, of a number of bogie wheels, slide, ball or roller bearings. One or more sliding surfaces 25 of some type of self-lubricating material, e.g. Teflon plastic, may be arranged between said measuring carriage 13 and measuring beam 11, suitably along the entire extension of said guides mentioned above, beside at least one or between several of these guides.

According to Figures 3-5 said measuring carriage 13 comprises a positioning unit 26 on which the coupling 27 for the traversing means 14 is arranged, enabling positioning of the measuring carriage 13 in a to and fro linear movement to each desired and predetermined position along one or more of the linear journalling means 21 of the measuring beam 11, suitably along one or more of the journalling means 21 arranged at the sides of the measuring beam 11 facing the measuring object 5. In the embodiment shown the positioning unit 26 comprises a slide or carriage 28 in which one each of said couplings 27 for the traversing device 14 is arranged at its two opposite ends seen in the direction of travel, and also a sleeve or frame 29 surrounding the support beam 11 and connecting said carriage 28 with the other journalling means 21 described above.

In the embodiment shown in Figure 3 a tensioning device 30 is arranged on the measuring carriage 13, at the lower edge of the frame 29, the function of the tensioning device 30 being to suitably hold and clamp the measuring carriage 13 against the measuring beam 11 during its linear movements to and fro. The tensioning device 30, which in the device shown, comprises a link arm 31 arranged pivotably at one end of the frame 29, with a suitable journalling means 32 such as a bogie wheel at its free, opposite end, which tensioning device 30 is clamped against and cooperates with the support member 11, suitably one of the linear journalling means 21 described above, of the support member 11. Said link arm 31 can then either be fixed at a specific angle by means of a screw member 33 arranged at its pivot point, or a suitable tension force can be obtained by means of a spring member, not shown, arranged together with said link arm 31.

The other, movable part of the above-mentioned non-contact end-sensing device(s) 20 is also fitted on the measuring carriage 13, which end-sensing devices 20 record the current position of the measuring carriage 13 in relation to its start or end position travelling along the measuring beam 11, so that the traversing movement can always commence and finish at a known position in relation to said end position. The measured values obtained can thus easily be compared within the same measuring sequence and also with equivalent measured values obtained during previous measurements performed on the same or other similar measuring objects 5.

An adjustment member 35 is also arranged at the positioning unit 26 of the measuring carriage 13, see Figures 6, 8 and 9, and comprises a shaft 36 arranged in suitable manner in the longitudinal direction of the support beam 11, and at least one hinge member 37 pivotable about this shaft 36. Said hinge member 37 can be secured to the shaft 36, e.g. by a screw member 38, so that a retaining and adjustment member 39, e.g. consisting of a platform of bent sheet metal, arranged at this hinge member(s) 37, on which platform 39 the measuring means 6 is/are mounted, can be set at a desired angle to the envelope surface 3 of the measuring object 5.

In order to adjust said platform 39 to a suitable distance for these measuring means 6 from said envelope surface 3 in radial direction also, a manual or automatic adjustment member 40 is arranged, in the embodiment illustrated in Figure 9, at the lower side of said platform 39. The adjustment member 40 then comprises a spring member 41, which in the embodiment illustrated consists of a rod 42 attached to the hinge member 37 perpendicularly to the measuring object 5 and parallel with said platform 39 and a forward control element 43 and a rear control element 44, both displaceable along the rod 42, which control elements 43, 44 are permanently mounted on the platform 39, the latter thus being adjustable along said rod 42, and also a spring 45 coiled around said rod 42 so that a force is obtained on the platform 39 directed against the measuring object 5, and also a manual or automatic actuator 46, in the embodiment shown in Figure 6 extending between said hinge 37 and the rear control element 44 and acting parallel to this spring member 41, e.g. consisting of a micrometer screw or an electric motor, so that said distance from the envelope surface 3 of the measuring object 5 can be controlled, in the latter case automatically, by the measuring and control unit 15 in cooperation with said spring member 41.

One or more protective spacers 47 are fitted on the front of the platform 39, facing the measuring object 5, suitably shaped as blocks of plastic, ceramic, composite or some other suitable material that does not damage the envelope surface 3 of said measuring object 5 in the event of contact between them, during adjustment of said platform 39, for instance.

Said traversing device 14 comprises a motor 48, see Figure 5, such as a stepping or servo motor, suitably arranged at one end of the measuring beam 11 for propelling said measuring carriage 13, a coupling 49 which may comprise a planetary gear, a drive shaft 50 from the motor 48 connected to one wheel, in this case constituting a driving wheel, of at least two journalling members such as wheels 51, 52, between and around which wheels 51, 52 at least one synchronous transmission belt 53 runs in a loop in a completely or partially sheltered position inside the support member 11, and each of the above-mentioned coupling 27 between the ends of the transmission belt 53 and the positioning unit 26 of said measuring carriage 13. Said coupling 27 is suitably designed with some form of means to regulate the tension in the transmission belt 53.

The described motor 48, with all movable parts carefully enclosed to protect them from external influence of dust, fluff, etc., is controlled so that it automatically adjusts the measuring carriage 13 with the aid of the transmission belt 53 to any desired position along the measuring beam 11, instead of the previous complicated and in some cases dangerous method of pushing the measuring carriage 13 manually.

The electronic measuring and control unit 15 used in the measuring device 1 for controlling said motor 48, collecting the measured values obtained by the measuring means 6 and presenting the calculated results, comprises a computer 54 with a pre-programmed measurement collection card suitably in the form of an insert card for the computer. The computer 54 is specially designed for recording measurement data from different forms and types of transducers, including the requisite data processing of said measured values, and suitably presents the result either visually on a display screen 55 or in the form of a data print-out. The computer 54 may also include a calibrating unit for the straightness reference 16. In the embodiment shown the straightness reference 16 comprises a laser beam 58 generated by at least one laser unit comprising a laser transmitter 56 and a receiver detector 57, see Figure 2, said laser unit also including a correction and control device, not shown, enabling adjustment of the direction of the laser beam 58 to be performed with the aid of two differential micrometer screws. This fine adjustment allows an accuracy of adjustment of 0.001 mm per meter. In the embodiment shown the laser detector 57 comprises a 2-axis, position-sensitive receiver with a detector surface of 20x20 mm, said receiver having a display box with two display windows showing the x and y values, respectively, of the detector 57 in digital form with a resolution of 0.01 mm.

To enable the whole straightness reference 16 or a part of it, as well as preferably also the laser unit with one, several or all its parts, to be screened off from all external influence such as air turbulence, temperature fluctuations, collected dust, paper fluff and liquid sprayed from the paper web, etc. an elongate protective device 17, mentioned above, is arranged below at least a part of the length of the laser beam 58 substantially parallel with the measuring beam 11. In the embodiment described this protective device 17, which may be telescopic, comprises a laser path 59 constituting some form of an extended member 60 inside which, or sheltered by which, the laser beam 58 extends, such as a screen, hollow beam, pipe or boom at least partially surrounding or in some other way protecting the laser beam 58. Alternatively the protective device may comprise a resilient bellows, suitably of plastic or rubber, which laser path 59 thus forms an undisturbed light channel for the laser beam 58 between its transmitter 56 and receiver 57, said extended member 60 having at least one gap, sector or groove, not shown, running horizontally along one side and extending at least along the part(s) of the member 60 located between the end positions applicable for traversing of the measuring carriage 13, said gap suitably being screened from the outer of two or more coaxial brush members arranged preferably parallel to each other on each side of said gap thereby forming a soft, flexible curtain which screens and closes the gap in a plastic and yielding manner. The purpose and function of said brush members is to protect the straightness reference 16 arranged in the shelter of, or inside the protective device 17, the elongate protective device 17 thus forming a space constituting said light channel in the centre of which the detector 57 or laser transmitter 56 are arranged or operate. Either the laser transmitter 56 or the receiver detector 57 is mounted on the measuring carriage 13 and the remaining either receiver detector 57 or laser transmitter 56 is mounted on the measuring beam 11, protected from external influence, after having been accurately adjusted with the aid of said correcting and control devices.

When measuring the cylindricity or, if preferred, the non-cylindricity, the differences are thus measured in the distance between the envelope surface 3 of the measuring object 5 and the measuring means 6, the measuring means 6 being maintained in one and the same stationary position on the measuring beam 11 throughout a complete rotation of the measuring object 5. Measuring is suitably performed in such a way that a measured value is obtained both for each degree of rotation during a revolution so that the mentioned non-cylindricity can be obtained, and also for a number of positions along the measuring beam 11 where the location of the measuring means 6 in relation to the straightness reference 16 is determined, so that the straightness profile of the measuring object 5 can also be obtained. The number of measuring positions is determined by the length of the measuring object 5 and the required accuracy of the measuring result.

The measuring results thus automatically collected, analyzed and suitably processed may be reported both in real time, in the embodiment shown on said display screen 55 included in the control and measuring unit 15, graphically in the isometric form described above for instance, or in tabular form, and also on a unit, e.g. a printer, connected thereto. If appropriate, said measurement and reporting may be performed for different operating conditions such as web speed, temperature or some other parameter of significance to operation.

The measuring device 1 according to the embodiment illustrated is dismountable and can therefore be packed up and simply moved when necessary between different measuring objects 5 or machines, and installed at the measuring object 5 selected, e.g. a Yankee cylinder, where said measurement can be performed during manufacture, in connection with service and repair or even during operation of the finished and installed cylindrical body 5.

Since sufficient and relatively accessible space for mounting and handling the measuring device 1 and measuring carriage 13 is required close to and between the Yankee cylinder and the web draw, the measuring device 1 is normally placed between the creping and cleaning doctors. If necessary it is also possible to measure through the web and a position both before and after the pickup doctor may therefore be used.

All transducers or similar measuring means used in the measuring device 1 are suitably non-contacting transducers, e.g. optical, photo-electric or inductive eddy-current transducers of known type, but may of course be entirely or partially replaced with electric, mechanical or pneumatic contact means if deemed sufficient.

If the above-mentioned revolution pulse device 9 is placed on the axis of rotation 8 of the measuring object 5, in this case suitably said photocell detector, it can suitably be attached to said shaft 8 by means of a belt-like attachment member to facilitate mounting and dismantling of said revolution pulse device 9.

The measurement of the cylindricity and/or straightness of a measuring object 5 can of course also include simultaneous recording of any other required parameter possible and desirable for measuring objects 5 of this type, using one of the measuring devices now commercially available. Such parameters are mentioned above and include deposits, corrosion, wear patterns, magnitude of wear, etc. The described invention is particularly suitable for measuring at a Yankee cylinder.

## Claims

1. A method for, without contact and with the aid of a measuring device (1), measuring in a predetermined measuring area (2) in connection to an envelope surface (3) of at least one measuring object (5) journalled rotatably in a machine stand of a paper machine, with respect to its cylindricity and/or its straightness relative to a straightness reference (16) arranged substantially parallel with the axis of rotation (8) of the measuring object (5), which measuring device (1) comprises said straightness reference (16), a measuring stand (10) and a linearly movably journalled measuring carriage (13) on which at least one measuring means (6) is arranged, said measuring carriage (13) during said measurement travels along an elongate form-stable support member (11) forming a part of the measuring stand (10), and running substantially parallel to the axis of rotation (8) of the measuring object (5), whereby said measuring means (6) is moved to one or more desired positions for the measurement and the measuring means (6) is caused to perform a measurement of the present measurement values at each such position selected in said measuring area (2), wherein the measuring commences with a starting position for the measuring means (6) relative the straightness reference (16) and the measuring object (5) being determined, which starting position comprises an initial position for the rotating measuring object (5), a current position along the support member (11) and a position in radial direction from the envelope surface (3) of the measuring object (5), wherein a first measurement is performed for this starting position, wherein the measuring means (6) is thereafter moved to at least one more position along the support member (11) while this or these new positions are continuously determined in relation to each other or said starting position, whereupon a measurement occurs in said measuring area (2) at each position, and wherein a laser beam (58) is used as straightness reference (16), said laser beam being generated by a laser unit, **characterised in that** the laser beam (58) is protected from external influence by being arranged along at least a part of its length in the shelter of an elongate protective device (17) arranged substantially parallel with said support member (11).

2. A method as claimed in claim 1, **characterized in that** at least one revolution pulse device (9) is arranged at the measuring object (5), that said initial position is determined with the aid of the revolution pulse device (9), and that said current position along the support member (11) is determined with the aid of stop members (20) arranged at each end of the support member (11).

3. A method as claimed in claim 1 or claim 2, **characterized in that** the laser beam (58) is protected from external influence by the laser unit and the laser beam (58) generated thereby being arranged inside the elongate protective device (17) arranged parallel with said support member (11).

4. A method as claimed in any of the preceding claims, **characterized in that** the measured values obtained are processed and reported by means of an electronic measuring and control unit (15).

5. A method as claimed in claim 4, **characterized in that** traversing of the measuring carriage (13) along the support member (11) occurs automatically with the aid of a traversing device (14) comprising a motor (48), a coupling (49), a drive shaft (50), at least two wheels (51, 52), one of which comprises a driving wheel (51), between and around which wheels (51, 52) at least one synchronous transmission belt (53) runs in a loop secured to said measuring carriage (13), the synchronous transmission belt (53) being located in a completely or partially sheltered position inside the support member (11), and that the traversing device (14) is controlled by the electronic measuring and control unit (15) which has been pre-programmed to place the measuring carriage (13) in optional, predetermined positions along the support member (11).

6. A method as claimed in one or more of the preceding claims, **characterized in that** a retaining and adjustment member (39) arranged on said measuring carriage (13) is set at a desired angle relative the envelope surface (3) of the measuring object (5) with the aid of an adjustment member (35) arranged at a positioning unit (26) arranged on the measuring carriage (13) and comprising a shaft (36) arranged in the longitudinal direction of the support member (11), that at least one hinge member (37) is turned about this shaft (36), and that the hinge member (37) is thereafter secured to the shaft (36) so that the retaining and adjustment member (39) arranged at these hinge members (37) acquires said desired angle to the envelope surface (3) of the measuring object (5).

7. A method as claimed in claim 6, **characterized in that** said retaining and adjustment member (39) is also set in radial direction at a distance from the envelope surface (3) of the measuring object (5) suitable for said measuring means (6), with the aid of a manual or automatic adjustment device (40), thereby enabling said distance to be regulated at the automatic adjustment device (40) with the aid of the measuring and control unit (15).

8. A method as claimed in any of the preceding claims, **characterized in that** measurement occurs in the predetermined measuring area (2) of every other desired property or parameter of or at said measuring object (5), and also of a material web running over and around said measuring object (5) which it is considered advantageous to determine with the aid of said measuring device (1), such as corrosion, wear, temperature or velocity, and that at least one additional suitable measuring means (6) is therefore arranged on the measuring device (1).

9. A measuring device (1) for, without contact, measuring in a predetermined measuring area (2) in connection to an envelope surface (3) of at least one measuring object (5) journalled rotatably in a machine stand of a paper machine, with respect to its cylindricity and/or its straightness relative to a straightness reference (16), said straightness reference (16) being arranged substantially parallel with the axis of rotation (8) of the measuring object (5), which measuring device (1) comprises said straightness reference (16), a measuring stand (10) and a linearly movably journalled measuring carriage (13) on which at least one measuring means (6) is arranged, said measuring carriage (13) during said measurement is traversed along an elongate form-stable support member (11) forming a part of the measuring stand (10), and running substantially parallel to the axis of rotation (8) of the measuring object (5), wherein said straightness reference (16) comprises a laser beam (58) which is generated by a laser unit comprising a laser transmitter (56) and a receiver detector (57), **characterised in that** said laser beam (58) is protected from external influence by being arranged along at least a part of its length in the shelter of an elongate protective device (17) arranged substantially parallel with said support member (11).

10. A measuring device as claimed in claim 9, **characterized in that** the laser unit and thus its laser transmitter (56) and receiver detector (57) are arranged inside the elongate protective device (17) arranged substantially parallel to said support member (11).

11. A measuring device as claimed in claim 9 or claim 10, **characterized in that** the measuring device (1) also includes an electronic measuring and control unit (15).

12. A measuring device as claimed in any of claims 9 to 11, **characterized in that** the measuring device (1) also includes an automatic traversing device (14) to set said measuring carriage (13) in desired measuring positions along said support member (11), said traversing device (14) comprising a motor (48) suitably arranged at one end of the support member (11) and comprising a coupling (49) and a drive shaft (50) connected to one of at least two wheels (51, 52) provided as journalling members, one of which comprises a driving wheel (51), between and around which wheels (51, 52) at least one synchronous transmission belt (53) runs in a loop in a completely or partially sheltered position inside the support member (11), and each one a coupling (27) between the ends of each transmission belt (53) and a positioning unit (26) arranged at the measuring carriage (13).

13. A measuring device as claimed in any of claims 9 to 12, **characterized in that** said support member (11) comprises one or more form-stable, substantially identical sections (18) joined together by means of suitable joints (19) to form a coherent length corresponding to at least the length of the desired measuring area (2), which joints (19) are recessed in the sides of the sections (18), a stop member (20) arranged at each end of said support member (11), suitably consisting of one part of one or more contact-free end-sensing devices comprising transducers such as photocells, inductive transducers or the like for recording the current position of said measuring carriage (13) relative a start or end position along the support member (11), one or more linear journalling means (21) arranged substantially parallel with and close to one or more of the sides of the support member (11), which linear journalling means (21) comprise one or more parallel guides constituting a shaped bar, slide or rail along which some form of journalling member (24) arranged on the measuring carriage (13) runs in cooperation.

14. A measuring device as claimed in claim 13 in combination with claim 12, **characterized in that** the positioning unit (26) comprises a slide or carriage (28) in which one each of said couplings (27) for the traversing means (14) is arranged at its two opposite ends seen in the direction of travel, and also a sleeve or frame (29) surrounding the support member (11) and connecting said carriage (28) with the linear journalling means (21).

15. A measuring device as claimed in claim 13 or 14, **characterized in that** a tensioning device (30) is arranged at the measuring carriage (13), said tensioning device comprising a link arm (31) arranged pivotably at one end of the measuring carriage (13), with a journalling means (32) at its free, opposite end, which tensioning device (30) is clamped against and cooperates with the support member (11), suitably one of the linear journalling means (21) of the support member (11).

16. A measuring device as claimed in claim 12, or in claim 13 in combination with claim 12, or in claim 14, **characterized in that** an adjustment member (35) is also arranged at the positioning unit (26) of the measuring carriage (13), which adjustment member comprises a shaft (36) arranged in the longitudinal direction of the support member (11) and at least one hinge member (37) pivotable about this shaft (36), which can be secured to the shaft (36) so that a retaining and adjustment member (39) arranged at this or these hinge member(s) (37), on which member (39) said measuring means (6) is/are mounted, can be set at a desired angle to the envelope surface (3) of the measuring object (5).

17. A measuring device as claimed in claim 16, **characterized in that** a manual or automatic adjustment member (40) is arranged at said retaining and adjustment member (39) to adjust this also in radial direction to a suitable distance for said measuring means (6) from said envelope surface (3), which adjustment member (40) comprises a spring member (41) so that a force is obtained directed on the retaining and adjustment member (39) and against the measuring object (5), and also a manual or automatic actuator (46) acting parallel to this spring member (41), so that said distance from the envelope surface (3) of the measuring object (5) can be controlled, in the latter case automatically, by the measuring and control unit (15) in cooperation with said spring member (41).

18. A measuring device as claimed in claims 16 and 17, **characterized in that** one or more protective spacers (47) are fitted on the front of the retaining and adjustment member (39), facing the measuring object (5), suitably shaped as blocks of plastic, ceramic, composite or some other suitable material that does not damage the envelope surface (3) of said measuring object (5) in the event of contact between them.

19. A measuring device as claimed in any of claims 16 to 18, **characterized in that** the retaining and adjustment member (39) comprises a platform of bent sheet metal.

20. A measuring device as claimed in any of claims 9 to 19, **characterized in that** an elongate protective device (17) is arranged below at least a part of the length of the laser beam (58), substantially parallel with the support member (11), which protective device (17) comprises a laser path (59) comprising some form of elongate member (60) within which, or in the shelter of which, the laser beam (58) extends, which laser path (59) thus forms a light channel for the laser beam (58) between its transmitter (56) and its receiver (57), which elongate member (60) comprises at least one gap, sector or track running horizontally and extending at least along the part(s) of the elongate member (60) situated between the end positions applicable to the traversing of the measuring carriage (13), in which light channel the detector (57) and the laser transmitter (56) are arranged or operate, of which either the laser transmitter (56) or the receiver detector (57) is mounted on the measuring carriage (13) and the remaining either receiver detector (57) or laser transmitter (56) is mounted on the support member (11).

21. A measuring device as claimed in claim 20, **characterized in that** the protective device (17) is telescopic.

22. A measuring device as claimed in claim 20 or 21, **characterized in that** the elongate member (60) comprises a screen, hollow beam or pipe, or even resilient bellows, for instance, the bellows then suitably being of plastic or rubber, said member at least partially surrounding or otherwise protecting the laser beam (58).

23. A measuring device as claimed in any of claims 20 to 22, **characterized in that** the gap is screened from the outer of two or more coaxial brush members.

24. A measuring device as claimed in any of claims 9 to 23, **characterized in that** the measuring device (1) can be removed and transported between different measuring objects (5) or machines and thus installed at a measuring object (5) selected on a particular occasion so that measuring can be performed during manufacture of the measuring object (5), and also during operation of the finished and installed object.

## Patentansprüche

1. Verfahren für ein kontaktfreies und mit Hilfe ein Messvorrichtung (1) erfolgendes Messen in einem vorbestimmten Messbereich (2) in Verbindung mit einer Mantelfläche (3) von zumindest einem Messobjekt (5), das drehbar in einem Maschinengestell einer Papiermaschine gelagert ist, in Bezug auf seine Zylindrizität und / oder seine Geradheit relativ zu einer Geradheitsreferenz (16), die im Wesentlichen parallel zu der Drehachse (8) des Messobjektes (5) angeordnet ist, wobei die Messvorrichtung (1) die Geradheitsreferenz (16), ein Messgestell (10) und einen linear beweglich gelagerten Messschlitten (13), an dem zumindest eine Messeinrichtung (6) angeordnet ist, aufweist, wobei der Messschlitten (13) während der Messung entlang eines länglichen formstabilen Stützelements (11) läuft, der ein Teil des Messgestells (10) ausbildet, und im Wesentlichen parallel zu der Drehachse (8) des Messobjektes (5) läuft, wodurch die Messeinrichtung (6) zu einer oder zu mehreren erwünschten Positionen für die Messung bewegt wird und die Messeinrichtung (6) dazu gebracht wird, dass sie eine Messung der gegenwärtigen Messwerte bei jeder derartigen Position ausführt, die in dem Messbereich (2) gewählt wird, wobei das Messen bei einer Startposition für die Messeinrichtung (6) relativ zu der Geradheitsreferenz (16) beginnt und das Messobjekt (5) bestimmt wird, wobei die Startposition eine Anfangsposition für das sich drehende Messobjekt (5), eine gegenwärtige Position entlang des Stützelementes (11) und einer Position in radialer Richtung von der Mantelfläche (3) des Messobjektes (5) aufweist, wobei eine erste Messung für diese Startposition ausgeführt wird, wobei die Messeinrichtung (6) danach zu zumindest einer weiteren Position entlang des Stützelementes (11) bewegt wird, während diese neue Position oder diese neuen Positionen kontinuierlich in Bezug auf einander oder auf die Startposition bestimmt wird oder werden, woraufhin eine Messung in dem Messbereich (2) bei jeder Position geschieht, wobei ein Laserstrahl (58) als Geradheitsreferenz (16) verwendet wird, wobei der Laserstrahl durch eine Lasereinheit erzeugt wird,
**dadurch gekennzeichnet, dass**
der Laserstrahl (58) vor einem externen Einfluss geschützt wird, indem er entlang von zumindest einem Teil seiner Länge in dem Schutz einer länglichen Schutzvorrichtung (17) angeordnet wird, die im Wesentlichen parallel zu dem Stützelement (11) angeordnet ist.

2. Verfahren gemäß Anspruch 1,
**dadurch gekennzeichnet, dass**
zumindest eine Umlaufimpulsvorrichtung (9) an dem Messobjekt (5) angeordnet ist,
die Anfangsposition mit Hilfe der Umlaufimpulsvorrichtung (9) bestimmt wird und
die gegenwärtige Position entlang des Stützelementes (11) mit Hilfe von Anschlagelementen (20) bestimmt wird, die an jedem Ende des Stützelementes (11) angeordnet sind.

3. Verfahren gemäß Anspruch 1 oder 2,
**dadurch gekennzeichnet, dass**
der Laserstrahl (58) vor einem externen Einfluss durch die Lasereinheit geschützt wird und der Laserstrahl (58), der dadurch erzeugt wird, innerhalb der länglichen Schutzvorrichtung (17) angeordnet ist, die parallel zu dem Stützelement (11) angeordnet ist.

4. Verfahren gemäß einem der vorherigen Ansprüche,
**dadurch gekennzeichnet, dass**
die erhaltenen Messwerte mittels einer elektronischen Mess- und Steuereinheit (15) verarbeitet und berichtet werden.

5. Verfahren gemäß Anspruch 4,
**dadurch gekennzeichnet, dass**
das Durchlaufen des Messschlittens (13) entlang des Stützelementes (11) automatisch mit Hilfe einer Durchlaufvorrichtung (14) geschieht, die einen Motor (48), eine Kupplung (49), eine Antriebswelle (50), zumindest zwei Räder (51, 52) aufweist, wobei eines von ihnen ein angetriebenes Rad (51) ist, wobei zwischen den Rädern und um diese Räder (51, 52) herum zumindest ein Synchrontransmissionsriemen (53) in einer an dem Messschlitten (13) gesicherten Schleife läuft, wobei der Synchrontransmissionsriemen (53) bei einer vollständig oder teilweise abgeschirmten Position innerhalb des Stützelementes (11) angeordnet ist und
die Durchlaufvorrichtung (14) durch die elektronische Mess- und Steuereinheit (15), die vorprogrammiert worden ist, gesteuert wird, um den Messschlitten (13) bei wahlweisen vorbestimmten Positionen entlang des Stützelementes (11) anzuordnen.

6. Verfahren gemäß einem der vorherigen Ansprüche,
**dadurch gekennzeichnet, dass**
ein Halte- und Einstellelement (39), das an dem Messschlitten (13) angeordnet ist, bei einem erwünschten Winkel relativ zu der Mantelfläche (3) des Messobjektes (5) mit Hilfe eines Einstellelementes (35) eingestellt wird, das an einer Positioniereinheit (26) angeordnet ist, die an dem Messschlitten (13) angeordnet ist, und eine Welle (36) aufweist, die in der Längsrichtung des Stützelementes (11) angeordnet ist,
zumindest ein Scharnierelement (37) um diese Welle (36) gedreht wird, und
das Scharnierelement (37) danach an der Welle (36) so gesichert wird, dass das Halte- und Einstellelement (39), das an diesen Scharnierelementen (37) angeordnet ist, den erwünschten Winkel zu der Mantelfläche (3) des Messobjektes (5) erlangt.

7. Verfahren gemäß Anspruch 6,
**dadurch gekennzeichnet, dass**
das Halte- und Einstellelement (39) außerdem in radialer Richtung bei einem Abstand von der Mantelfläche (3) des Messobjektes (5) in geeigneter Weise für die Messeinrichtung (6) mit Hilfe einer manuellen oder automatischen Einstellvorrichtung (40) eingestellt wird, wodurch ermöglicht wird, dass der Abstand bei der automatischen Einstellvorrichtung (40) mit Hilfe der Mess- und Steuereinheit (15) reguliert wird.

8. Verfahren gemäß einem der vorherigen Ansprüche,
**dadurch gekennzeichnet, dass**
eine Messung, die in dem vorbestimmten Messbereich (2) von jeder anderen erwünschten Eigenschaft oder jedem anderen erwünschten Parameter von dem oder bei dem Messobjekt (5) und außerdem von einer Materialbahn, die über das oder um das Messobjekt (5) herum läuft, geschieht, wobei sie als vorteilhaft erachtet wird, um mit Hilfe der Messvorrichtung (1) beispielsweise eine Korrosion, einen Verschleiß, eine Temperatur oder eine Geschwindigkeit zu bestimmen und zumindest eine zusätzliche geeignete Messeinrichtung (6) daher an der Messvorrichtung (1) angeordnet wird.

9. Messvorrichtung (1) für ein kontaktfreies Messen in einem vorbestimmten Messbereich (2) in Verbindung mit einer Mantelfläche (3) von zumindest einem Messobjekt (5), das drehbar in einem Maschinengestell einer Papiermaschine gelagert ist, in Bezug auf seine Zylindrizität und / oder seine Geradheit relativ zu einer Geradheitsreferenz (16), wobei die Geradheitsreferenz (16) im Wesentlichen parallel zu der Drehachse (8) des Messobjektes (5) angeordnet ist, wobei die Messvorrichtung (1) die Geradheitsreferenz (16), ein Messgestell (10) und einen linear beweglich gelagerten Messschlitten (13) aufweist, an dem zumindest eine Messeinrichtung (6) angeordnet ist, wobei der Messschlitten (13) während der Messung entlang einem formstabilen Stützelement (11) durchläuft, das einen Teil des Messgestells (10) ausbildet und im Wesentlichen parallel zu der Drehachse (8) des Messobjektes (5) verläuft, wobei die Geradheitsreferenz (16) einen Laserstrahl (58) aufweist, der durch eine Lasereinheit erzeugt wird, die einen Lasertransmitter (56) und eine Empfangserfassungseinrichtung (57) aufweist,
**dadurch gekennzeichnet, dass**
der Laserstrahl (58) vor einem externen Einfluss geschützt ist, indem er entlang von zumindest einem Teil seiner Länge im Schutz einer länglichen Schutzvorrichtung (17) angeordnet ist, die im Wesentlichen parallel zu dem Stützelement (11) angeordnet ist.

10. Messvorrichtung gemäß Anspruch 9,
**dadurch gekennzeichnet, dass**
die Lasereinheit und somit sein Lasertransmitter (56) und seine Empfangserfassungseinrichtung (57) innerhalb der länglichen Schutzvorrichtung (17) angeordnet sind, die im Wesentlichen parallel zu dem Stützelement (11) angeordnet ist.

11. Messvorrichtung gemäß Anspruch 9 oder 10,
**dadurch gekennzeichnet, dass**
die Messvorrichtung (1) außerdem eine elektronische Messund Steuereinheit (15) hat.

12. Messvorrichtung gemäß einem der Ansprüche 9 bis 11,
**dadurch gekennzeichnet, dass**
die Messvorrichtung (1) außerdem eine automatische Durchlaufvorrichtung (14) hat, um den Messschlitten (13) bei den erwünschten Messpositionen entlang des Stützelementes (11) einzustellen, wobei die Durchlaufvorrichtung (14) einen Motor (48) aufweist, der in geeigneter Weise an einem Ende des Stützelementes (11) angeordnet ist, und eine Kupplung (49) und eine Antriebswelle (50) aufweist, die mit einem von zumindest zwei Rädern (51, 52) verbunden ist, die als Lagerelemente vorgesehen sind, wobei eines von ihnen ein angetriebenes Rad (51) aufweist, wobei zwischen den Rädern und um die Räder (51, 52) herum zumindest ein Synchrontransmissionsriemen (53) in einer Schleife bei einer vollständig oder teilweise geschützten Position innerhalb des Stützelementes (11) läuft, und jeweils eine Kupplung (27) zwischen den Enden von jedem Transmissionsriemen (53) und eine Positioniereinheit (26), die an dem Messschlitten (13) angeordnet ist, aufweist.

13. Messvorrichtung gemäß einem der Ansprüche 9 bis 12,
**dadurch gekennzeichnet, dass**
das Stützelement (11) einen oder mehrere formstabile im Wesentlichen identische Abschnitte (18) aufweist, die miteinander mittels geeigneter Verbindungen (19) verbunden sind, um eine kohärente Länge auszubilden, die zumindest der Länge des erwünschten Messbereichs (2) entspricht, wobei die Verbindungen (19) an den Seiten der Abschnitte (18) eine Vertiefung, ein Anschlagelement (20), das an jedem Ende des Stützelementes (11) angeordnet ist und das in geeigneter Weise aus einem Teil von einer oder mehreren kontaktfreien Endabtastvorrichtungen, induktiven Wandlern oder dergleichen für ein Aufzeichnen der gegenwärtigen Position des Messschlittens (13) relativ zu einer Startposition oder einer Endposition entlang des Stützelementes (11) besteht, eine oder mehrere Linearlagereinrichtungen (21), die im Wesentlichen parallel zu und nahe zu einer oder mehreren Seiten des Stützelementes (11) angeordnet ist oder sind, wobei die Linearlagereinrichtungen (21) eine oder mehrere parallele Führungen aufweisen, die einen Formstab, eine Gleiteinrichtung oder eine Schiene ausbilden, entlang dem oder der eine Art an Lagerelement (24), das an dem Messschlitten (13) angeordnet ist, in Zusammenwirkung läuft, aufweisen.

14. Messvorrichtung gemäß Anspruch 13 in Kombination mit Anspruch 12,
**dadurch gekennzeichnet, dass**
die Positioniereinheit (26) eine Gleiteinrichtung oder einen Schlitten (28) aufweist, bei der oder bei dem jeweils eine der Kupplungen (27) für die Durchlaufeinrichtungen (14) an ihren zwei entgegengesetzten Enden unter Betrachtung ihrer Laufrichtung angeordnet ist, und außerdem eine Hülle oder einen Rahmen (29) aufweist, der das Stützelement (11) umgibt und den Schlitten (28) mit der Linearlagereinrichtung (21) verbindet.

15. Messvorrichtung gemäß Anspruch 13 oder 14,
**dadurch gekennzeichnet, dass**
eine Spannvorrichtung (30) an dem Messschlitten (13) angeordnet ist, wobei die Spannvorrichtung einen Verbindungsarm (31) aufweist, der drehbar an einem Ende des Messschlittens (13) angeordnet ist, wobei eine Lagereinrichtung (32) an seinem freien entgegengesetzten Ende ist, wobei die Spannvorrichtung (30) an dem Stützelement (11), in geeigneter Weise eine der Linearlagereinrichtungen (21) des Stützelementes (11), geklemmt ist und mit diesem bzw. dieser zusammenwirkt.

16. Messvorrichtung gemäß Anspruch 12 oder gemäß Anspruch 13 in Kombination mit Anspruch 12 oder gemäß Anspruch 14,
**dadurch gekennzeichnet, dass**
ein Einstellelement (35) außerdem bei der Positioniereinheit (26) des Messschlittens (13) angeordnet ist, wobei das Einstellelement eine Welle (36), die in der Längsrichtung des Stützelementes (11) angeordnet ist, und zumindest ein Scharnierelement (37) aufweist, das um diese Welle (36) herum drehbar ist und das an der Welle (36) so gesichert werden kann, dass ein Halte- und Einstellelement (39), das an diesem oder an diesen Scharnierelement(en) (37) angeordnet ist, wobei an diesem Element (39) die Messeinrichtung(en) (6) montiert ist / sind, bei einem erwünschten Winkel gegenüber der Mantelfläche (3) des Messobjektes (5) eingestellt werden kann.

17. Messvorrichtung gemäß Anspruch 16,
**dadurch gekennzeichnet, dass**
ein manuelles oder automatisches Einstellelement (40) an dem Halte- und Einstellelement (39) angeordnet ist, um dieses auch in der radialen Richtung auf einen geeigneten Abstand für die Messeinrichtung (6) von der Mantelfläche (3) einzustellen, wobei das Einstellelement (40) ein Federelement (41), so dass eine Kraft erhalten wird, die an dem Halte- und Einstellelement (39) und gegen das Messobjekt (5) gerichtet ist, und außerdem einen manuellen oder automatischen Aktuator (46) aufweist, der parallel zu diesem Federelement (41) wirkt, so dass der Abstand von der Mantelfläche (3) des Messobjektes (5) in dem letztgenannten Fall automatisch durch die Mess- und Steuereinheit (15) im Zusammenwirken mit dem Federelement (41) gesteuert werden kann.

18. Messvorrichtung gemäß Anspruch 16 oder 17,
**dadurch gekennzeichnet, dass**
ein oder mehrere Schutzabstandshalter (47) an der Vorderseite des Halte- und Einstellelementes (39) sitzen, wobei sie dem Messobjekt (5) zugewandt sind, wobei sie in geeigneter Weise als Blöcke aus Kunststoff, Keramik, einem Verbundmaterial oder einem anderen geeigneten Material geformt sind, das die Mantelfläche (3) von dem Messobjekt (5) in dem Fall eines Kontaktes zwischen ihnen nicht beschädigt.

19. Messvorrichtung gemäß einem der Ansprüche 16 bis 18,
**dadurch gekennzeichnet, dass**
das Halte- und Einstellelement (39) eine Plattform aus einem gebogenen Blech aufweist.

20. Messvorrichtung gemäß einem der Ansprüche 9 bis 19,
**dadurch gekennzeichnet, dass**
eine längliche Schutzvorrichtung (17) unterhalb von zumindest einem Teil der Länge des Laserstrahls (58) im Wesentlichen parallel zu dem Stützelement (11) angeordnet ist, wobei die Schutzvorrichtung (17) eine Laserbahn (59) aufweist, die eine Art längliches Element (60) aufweist, innerhalb dem oder in dessen Schutz der Laserstrahl (58) sich erstreckt, wobei die Laserbahn (59) somit einen Lichtkanal für den Laserstrahl (58) zwischen ihrem Transmitter (56) und ihrem Empfänger (57) ausbildet, wobei das längliche Element (60) zumindest einen Zwischenraum, einen Sektor oder eine Bahn aufweist, der oder die horizontal läuft und sich zumindest entlang des Teils (der Teile) des länglichen Elementes (60) erstreckt, das zwischen den Endpositionen angeordnet ist, die bei dem Durchlaufen des Messschlittens (13) anwendbar sind, wobei in dem Lichtkanal die Erfassungseinrichtung (57) und der Lasertransmitter (56) angeordnet sind oder arbeiten, wobei von ihnen entweder der Lasertransmitter (56) oder die Empfangserfassungseinrichtung (57) an dem Messschlitten (13) montiert ist, und das andere Element, d.h. entweder die Empfangserfassungseinrichtung (57) oder der Lasertransmitter (56) an dem Stützelement (11) montiert ist.

21. Messvorrichtung gemäß Anspruch 20,
**dadurch gekennzeichnet, dass**
die Schutzvorrichtung (17) teleskopisch ist.

22. Messvorrichtung gemäß Anspruch 20 oder 21,
**dadurch gekennzeichnet, dass**
das längliche Element (60) einen Schirm, einen hohlen Balken oder ein Rohr oder sogar einen elastischen Balg beispielsweise aufweist, wobei der Balg dann in geeigneter Weise aus Kunststoff oder Gummi ist, wobei das Element zumindest teilweise den Laserstrahl (58) umgibt oder anderweitig schützt.

23. Messvorrichtung gemäß einem der Ansprüche 20 bis 22,
**dadurch gekennzeichnet, dass** der Zwischenraum von dem äußeren der zwei oder mehr koaxialen Bürstenelementen abgeschirmt ist.

24. Messvorrichtung gemäß einem der Ansprüche 9 bis 23,
**dadurch gekennzeichnet, dass**
die Messvorrichtung (1) zwischen verschiedenen Messobjekten (5) oder Maschinen entfernt oder transportiert werden kann und somit bei einem Messobjekt (5) eingebaut werden kann, das bei einem speziellen Fall so gewählt wird, dass ein Messen während der Herstellung des Messobjektes (5) und außerdem während des Betriebs des fertigen und eingebauten Objektes ausgeführt werden kann.

## Revendications

1. Procédé pour, sans contact et à l'aide d'un dispositif de mesure (1), mesurer dans une zone de mesure prédéterminée (2) en connexion avec une surface extérieure (3) d'au moins un objet de mesure (5) monté de manière rotative dans un poste de machine d'une machine de fabrication de papier, en ce qui concerne sa cylindricité et/ou sa rectitude par rapport à une référence de rectitude (16) agencé sensiblement parallèlement à l'axe de rotation (8) de l'objet de mesure (5), le dispositif de mesure (1) comprenant ladite référence de rectitude (16), un poste de mesure (10) et un chariot de mesure linéairement déplaçable monté sur des paliers (13) sur lequel au moins un moyen de mesure (6) est agencé, ledit chariot de mesure (13) se déplaçant pendant ladite mesure le long d'un élément de support allongé de forme stable (11) faisant partie du poste de mesure (10) et se déplaçant sensiblement parallèlement à l'axe de rotation (8) de l'objet de mesure (5), moyennant quoi ledit moyen de mesure (6) se déplace vers une ou plusieurs positions désirées pour le mesurage et le moyen de mesure (6) est amené à exécuter une mesure des valeurs de mesure actuelles au niveau de chacune de ces positions choisies à l'intérieur de ladite zone de mesure (2), dans lequel le mesurage commence avec une position de départ déterminée pour le moyen de mesure (6) par rapport à la référence de rectitude (16) et l'objet de mesure (5), cette position de départ comprenant une position initiale pour l'objet de mesure rotatif (5), une position actuelle le long de l'élément de support (11) et une position dans la direction radiale à partir de la surface extérieure (3) de l'objet de mesure (5), dans lequel un premier mesurage est exécuté pour cette position de départ, dans lequel le moyen de mesure (6) se déplace ensuite vers au moins une autre position le long de l'élément de support (11) tandis que cette ou ces nouvelle(s) position(s) est (sont) déterminée(s) en continu en relation les unes par rapport aux autres ou par rapport à ladite position de départ, à partir de quoi un mesurage est exécuté dans ladite zone de mesure (2) au niveau de chaque position, et dans lequel un faisceau laser (58) est utilisé comme référence de rectitude (16), ledit faisceau laser étant produit par une unité laser, **caractérisé en ce que** le faisceau laser (58) est protégé contre toute influence extérieure en étant agencé le long d'au moins une partie de sa longueur dans l'abri d'un dispositif de protection allongé (17) agencé sensiblement parallèlement audit élément de support (11).

2. Procédé selon la revendication 1, **caractérisé en ce qu'**au moins un dispositif rotatif à impulsions (9) est agencé au niveau de l'objet de mesure (5), que ladite position initiale est déterminée à l'aide du dispositif rotatif à impulsions (9), et **en ce que** ladite position actuelle le long de l'élément de support (11) est déterminée à l'aide d'éléments de butée (20) agencés au niveau de chaque extrémité de l'élément de support (11).

3. Procédé selon les revendications 1 ou 2, **caractérisé en ce que** le faisceau laser (58) est protégé contre toute influence extérieure par l'unité laser et que le faisceau laser (58) produit par celle-ci est agencé à l'intérieur du dispositif de protection allongé (17) agencé parallèlement audit élément de support (11).

4. Procédé selon l'une quelconque des revendications précédentes, **caractérisé en ce que** les valeurs mesurées obtenues sont traitées et rapportées au moyen d'une unité de mesure et de commande électronique (15).

5. Procédé selon la revendication 4, **caractérisé en ce que** le déplacement du chariot de mesure (13) le long de l'élément de support (11) est exécuté automatiquement à l'aide d'un dispositif à déplacement (14) comprenant un moteur (48), un accouplement (49), un arbre de commande (50), au moins deux roues (51, 52), dont une comprend une roue d'entraînement (51), entre et autour des roues (51, 52) au moins une courroie de transmission synchronisée (53) qui est fixée audit chariot de mesure (13) tourne en boucle, la courroie de transmission synchronisée (53) étant positionnée dans une position complètement ou partiellement abritée à l'intérieur de l'élément de support (11), et **en ce que** le dispositif à déplacement (14) est commandé par l'unité de mesure et de commande électronique (15) qui a été pré-programmée de manière à placer le chariot de mesure (13) dans des positions facultatives prédéterminées le long de l'élément de support (11).

6. Procédé selon une ou plusieurs des revendications précédentes, **caractérisé en ce qu'**un élément de fixation et de réglage (39) agencé sur ledit chariot de mesure (13) est réglé à un angle désiré par rapport à la surface extérieure (3) de l'objet de mesure (5) à l'aide d'un élément de réglage (35) agencé au niveau de l'unité de positionnement (26) agencée sur le chariot de mesure (13) et comprenant un arbre (36) agencé dans le sens longitudinal de l'élément de support (11), **en ce qu'**au moins un élément articulé (37) tourne autour de cet arbre (36), et **en ce que** l'élément articulé (37) est fixé de ce fait à l'arbre (36) de sorte que l'élément de fixation et de réglage (39) agencé au niveau de ces éléments articulés (37) acquiert ledit angle désiré de la surface extérieure (3) de l'objet de mesure (5).

7. Procédé selon la revendication 6, **caractérisé en ce que** ledit élément de fixation et de réglage (39) est également défini dans la direction radiale à une distance par rapport à la surface extérieure (3) de l'objet de mesure (5) qui est appropriée pour ledit moyen de mesure (6), à l'aide d'un dispositif de réglage manuel ou automatique (40), ce qui permet à ladite distance d'être régulée au niveau du dispositif de réglage automatique (40) à l'aide de l'unité de mesure et de commande (15).

8. Procédé selon l'une quelconque des revendications précédentes, **caractérisé en ce que** le mesurage est exécuté dans la zone de mesure prédéterminée (2) de chaque autre propriété ou paramètre désiré dudit ou au niveau dudit objet de mesure (5), et également d'une feuille de matériau disposée sur et autour dudit objet de mesure (5) qu'il est considéré comme étant avantageux de déterminer à l'aide dudit dispositif de mesure (1), comme la corrosion, l'usure, la température ou la vitesse par exemple, et **en ce qu'**au moins un autre moyen de mesure approprié (6) est par conséquent agencé sur le dispositif de mesure (1).

9. Dispositif de mesure (1) pour, sans contact, mesurer dans une zone de mesure prédéterminée (2) en connexion avec une surface extérieure (3) d'au moins un objet de mesure (5) monté de manière rotative dans un poste de machine d'une machine de fabrication de papier, par rapport à sa cylindricité et/ou sa rectitude par rapport à une référence de rectitude (16), ladite référence de rectitude (16) étant agencée sensiblement parallèlement à l'axe de rotation (8) de l'objet de mesure (5), le dispositif de mesure (1) comprenant ladite référence de rectitude (16), un poste de mesure (10) et un chariot de mesure monté sur des paliers linéairement déplaçable (13) sur lequel au moins un moyen de mesure (6) est agencé, ledit chariot de mesure (13) se déplaçant pendant ladite mesure le long d'un élément de support allongé de forme stable (11) faisant partie du poste de mesure (10) et se déplaçant sensiblement parallèlement à l'axe de rotation (8) de l'objet de mesure (5), dans lequel ladite référence de rectitude (16) comprend un faisceau laser (58) qui est produit par une unité laser comprenant un émetteur laser (56) et un détecteur de réception (57), **caractérisé en ce que** ledit faisceau laser (58) est protégé contre toute influence extérieure en étant agencé le long d'au moins une partie de sa longueur dans l'abri d'un dispositif de protection allongé (17) agencé sensiblement parallèlement audit élément de support (11).

10. Dispositif de mesure selon la revendication 9, **caractérisé en ce que** l'unité laser et, par voie de conséquence, son émetteur laser (56) et son détecteur de réception (57) sont agencés à l'intérieur du dispositif de protection allongé (17) agencé sensiblement parallèlement au dit élément de support (11).

11. Dispositif de mesure selon la revendication 9 ou 10, **caractérisé en ce que** le dispositif de mesure (1) comprend également une unité de mesure et de commande électronique (15).

12. Dispositif de mesure selon l'une quelconque des revendications 9 à 11, **caractérisé en ce que** le dispositif de mesure (1) comprend également un dispositif à déplacement automatique (14) pour programmer ledit chariot de mesure (13) dans des positions de mesure désirées le long dudit élément de support (11), ledit dispositif à déplacement (14) comprenant un moteur (48) convenablement agencé à une extrémité de l'élément de support (11) et comprenant un accouplement (49) et un arbre de commande (50) relié à une des au moins deux roues (51, 52) prévues en tant qu'éléments formant paliers, dont une comprend une roue d'entraînement (51), des roues (51, 52) entre et autour desquelles au moins une courroie de transmission synchronisée (53) tourne en boucle dans une position complètement ou partiellement abritée à l'intérieur de l'élément de support (11), et **en ce que** chacun des coupleurs (27) entre les extrémités de chacune d'une courroie de transmission (53) et d'une unité de positionnement (26) est agencé au niveau du chariot de mesure (13).

13. Dispositif de mesure selon l'une quelconque des revendications 9 à 12, **caractérisé en ce que** ledit élément de support (11) comprend une ou plusieurs sections de forme stable sensiblement identiques (18) réunies au moyen d'éléments de raccordement appropriés (19) pour former une longueur cohérente correspondant à au moins la longueur de la zone de mesure désirée (2), les éléments de raccordement (19) étant montés en renfoncement dans les côtés des sections (18), un élément de butée (20) agencé au niveau de chaque extrémité dudit élément de support (11), consistant d'une manière appropriée en une partie d'un ou plusieurs dispositifs de détection d'extrémité sans contact comprenant des transducteurs comme des cellules photoélectriques par exemple, des transducteurs d'induction ou similaires afin d'enregistrer la position actuelle dudit chariot de mesure (13) par rapport à une position de début ou de fin le long de l'élément de support (11), un ou plusieurs moyen(s) de déplacement linéaire monté sur des paliers (21) agencés sensiblement parallèlement à et proches d'un ou plusieurs des côtés de l'élément de support (11), les moyens de déplacement linéaire monté sur des paliers (21) comprenant un ou plusieurs guides parallèles constituant une barre en forme, un coulisseau ou un rail le long duquel une forme quelconque d'élément monté sur paliers (24) agencé sur le chariot de mesure (13) fonctionne en coopération.

14. Dispositif de mesure selon la revendication 13 en combinaison avec la revendication 12, **caractérisé en ce que** l'unité de positionnement (26) comprend une glissière ou chariot (28) dans lequel un de chacun desdits accouplements (27) pour les moyens de déplacement (14) est agencé au niveau de ses deux extrémités opposées vues dans la direction de déplacement et également un fourreau ou enveloppe (29) entourant l'élément de support (11) et raccordant ledit chariot (28) aux moyens de déplacement linéaire monté sur des paliers (21).

15. Dispositif de mesure selon la revendication 13 ou 14, **caractérisé en ce qu'**un dispositif de tension (30) est agencé au niveau du chariot de mesure (13), ledit dispositif de tension comprenant un bras de raccordement (31) agencé de façon pivotante à une extrémité du chariot de mesure (13), avec un moyen monté sur paliers (32) à son extrémité libre opposée, le dispositif de tension (30) étant bloqué contre et coopérant avec l'élément de support (11), de façon appropriée un des moyens de déplacement linéaire monté sur des paliers (21) de l'organe de support (11).

16. Dispositif de mesure selon la revendication 12 ou 13 en combinaison avec la revendication 12 ou 14, **caractérisé en ce qu'**un élément de réglage (35) est également agencé au niveau de l'unité de positionnement (26) du chariot de mesure (13), l'élément de réglage comprenant un arbre (36) agencé dans la direction longitudinale de l'élément de support (11), et au moins un élément articulé (37) susceptible de tourner autour de cet arbre (36), qui peut être fixé à l'arbre (36) de sorte qu'un élément de fixation et de réglage (39) agencé au niveau de ce(s) élément(s) articulé(s) (37), élément (39) sur lequel est (sont) monté(s) ledit (lesdits) moyen(s) (6), peut être réglé à un angle désiré de la surface extérieure (3) de l'objet de mesure (5).

17. Dispositif de mesure selon la revendication 16, **caractérisé en ce qu'**un dispositif de réglage manuel ou automatique (40) est agencé au niveau dudit élément de fixation et de réglage (39) pour ajuster celui-ci également dans une direction radiale par rapport à une distance appropriée pour ledit moyen de mesure (6) à partir de ladite surface extérieure (3), l'élément de réglage (40) comprenant un élément élastique (41) de sorte qu'une force est obtenue dirigée sur l'élément de fixation et de réglage (39) et contre l'objet de mesure (5), et également un actionneur manuel ou automatique (46) agissant parallèlement à cet élément élastique (41), de sorte que ladite distance par rapport à la surface extérieure (3) de l'objet de mesure (5) peut être contrôlée, automatiquement dans le dernier cas, par l'unité de mesure et de commande (15) en coopération avec ledit élément élastique (41).

18. Dispositif de mesure selon les revendications 16 et 17, **caractérisé en ce qu'**une ou plusieurs entretoises de protection (47) est (sont) montée(s) à l'avant de l'élément de fixation et de réglage (39), qui se trouve en face de l'objet de mesure (5), formées de façon appropriée par des blocs en plastique, céramique, matériaux composites ou tout autre matériau approprié qui ne risque pas d'endommager la surface extérieure (3) dudit objet de mesure (5) en cas de contact entre eux.

19. Dispositif de mesure selon l'une quelconque des revendications 16 à 18, **caractérisé en ce que** l'élément de fixation et de réglage (39) comprend une plate-forme en tôle courbée.

20. Dispositif de mesure selon l'une quelconque des revendications 9 à 19, **caractérisé en ce qu'**un dispositif de protection allongé (17) est agencé en dessous d'au moins une partie de la longueur du faisceau laser (58), sensiblement parallèlement à l'élément de support (11), le dispositif de protection (17) comprenant un trajet laser (59) comprenant une certaine forme d'élément allongé (60) à l'intérieur duquel, ou à l'abri duquel, le faisceau laser (58) s'étend, ce trajet laser (59) formant ainsi un canal de lumière pour le faisceau laser (58) entre sa partie émettrice (56) et sa partie réceptrice (57), l'élément allongé (60) comprenant au moins un espace, secteur ou plage disposé horizontalement et s'étendant au moins le long d'une (de) partie(s) de l'élément allongé (60) situé entre les positions d'extrémité applicables au déplacement du chariot de mesure (13), canal de lumière dans lequel le détecteur (57) et l'émetteur laser (56) sont agencés ou fonctionnent, parmi lesquels soit l'émetteur laser (56) soit le détecteur récepteur (57) est monté sur le chariot de mesure (13) et l'autre parmi soit l'émetteur laser (56) soit le détecteur récepteur (57) est monté sur l'élément de support (11).

21. Dispositif de mesure selon la revendication 20, **caractérisé en ce que** le dispositif de protection (17) est télescopique.

22. Dispositif de mesure selon la revendication 20 ou 21, **caractérisé en ce que** l'élément allongé (60) comprend un écran, un faisceau creux ou un tube, ou même des soufflets élastiques, par exemple, les soufflets étant alors de façon appropriée en plastique ou en caoutchouc, ledit élément entourant au moins partiellement ou protégeant autrement le faisceau laser (58).

23. Dispositif de mesure selon l'une quelconque des revendications 20 à 22, **caractérisé en ce que** l'espace est analysé au crible depuis l'extérieur de deux ou plusieurs éléments formant balais coaxiaux.

24. Dispositif de mesure selon l'une quelconque des revendications 9 à 23, **caractérisé en ce que** le dispositif de mesure (1) peut être retiré et transporté entre différent objets de mesure (5) ou machines et qu'il est ainsi installé au niveau d'un objet de mesure (5) choisi à une occasion particulière de telle sorte que la mesure peut être exécutée pendant la fabrication de l'objet de la mesure (5), et également lors de l'utilisation de l'objet fini et installé.
